# EUROPEAN PATENT SPECIFICATION

(11) **EP 1 909 271 B1**
(45) Date of publication and mention of the grant of the patent: **08.07.2009**
(21) Application number: 07117627.5
(22) Date of filing: 01.10.2007
(51) Int. Cl.: G11B 7/09, G11B 7/085, G11B 7/12, G11B 7/08, G02B 7/02

(54) **Optical pickup actuator capable of preventing adhesive agent in supporting portions of a damper base from deteriorating in strength**
Optischer Lesekopf zur Verhinderung der Leistungsbeeinträchtigung eines Klebemittels zur Stützung von Teilen einer Dämpfungsbasis
Actionneur pour tête de lecture optique capable d'empêcher l'agent adhésif dans des parties supportées d'un socle d'amortisseur de se détériorer en résistance

(30) Priority: 02.10.2006 JP 2006270274
(43) Date of publication of application: 09.04.2008
(73) Proprietor: Mitsumi Electric Co., Ltd., Tama-Shi, Tokyo (JP)
(72) Inventor: Tadano, Masahiko, c/o Mitsumi Electric Co., Ltd., Yamagata-shi Yamagata (JP); Moriya, Akihiro, c/o Mitsumi Electric Co., Ltd., Yamagata-shi Yamagata (JP)
(74) Representative: Tetzner, Michael

(56) References cited:
- EP-A- 1 630 797
- JP-A- 2006 018 887
- US-A- 5 018 836
- US-A1- 2003 161 228
- US-A1- 2005 128 894
- US-A1- 2006 001 987
- US-A1- 2006 168 607
- US-B1- 6 341 104

## Description

### Background of the Invention:

This invention relates to an optical pickup actuator and, in particular, to an optical pickup actuator for use in an optical pickup unit.

As well known in the art, an optical disc drive is a device for reading/writing information from/into an optical disc (CD, CD-ROM, CD-R/RW, DVD-ROM, DVD±R/RW, Blu-ray disc, HD-DVD, or the like). In order to achieve reading/writing the information from/into the optical disc, the optical disc drive of this type comprises an optical pickup unit for irradiating a laser beam onto the optical disc and for detecting its reflected beam.

In the manner which is well known in the art, in DVD apparatuses, there is one in which a particular optical pickup unit is mounted in order to enable to record/reproduce data in/from both of a digital versatile disc (DVD) and a compact disc (CD). The particular optical pickup unit of the type is for carrying out recording or reproducing by selectively using two kinds of laser beams, namely, a laser beam having a short wavelength (a wavelength band of 650 nm) for the DVD and a laser beam having a long wavelength (a wavelength band of 780 nm) for the CD. The particular optical pickup unit is called a two-wavelength handling optical pickup unit.

One of the two-wavelength handling optical pickup units of the type described comprises a first laser diode (LD) for emitting or irradiating the laser beam (a first laser beam) having the short wavelength for the DVD and a second laser diode (LD) for emitting or irradiating the laser beam (a second laser beam) having the long wavelength for the CD. Such a two-wavelength handling optical pickup unit is disclosed in Japanese Unexamined Patent Application Publication No. 2003-173563 or JP-A 2003-173563.

However, if the first laser diode and the second laser diode are formed as separate parts, it is inconvenient that the two-wavelength handling optical pickup unit comprises a lot of parts and is large-scale. In order to cope with such problems, a new laser diode comprising, as one part (one chip), the first laser diode and the second laser diode is developed and proposed, for example, in Japanese Unexamined Patent Application Publication No. 11-149652 or JP-A 11-149652. Such a new laser diode is called a one-chip type laser diode. It is possible to miniaturize the two-wavelength handling optical pickup unit by using the one-chip type laser diode. Inasmuch as the one-chip type laser diode has a first emission point for emitting the first laser beam and a second emission point for the second laser beam that are apart from each other by a predetermined distance of, for example, 100 µm, the first laser beam and the second laser beam are emitted or irradiated in parallel with they apart from each other by the predetermined distance.

Furthermore, in recent DVD apparatuses, it has been developed one in which a special optical pickup unit is mounted in order to enable to record/reproduce data in/from not only the DVD and the CD but also a high definition DVD (HD-DVD). The special optical pickup unit of the type is for carrying out recording or reproducing by selectively using three kinds of laser beams, namely, a laser beam having a middle wavelength (a wavelength band of 650 nm) for the DVD, a laser beam having a long wavelength (a wavelength band of 780 nm) for the CD, and a laser beam having a short wavelength (wavelength band of 410 nm) for the HD-DVD. The special optical pickup unit is called a three-wavelength handling optical pickup unit.

Such a three-wavelength handling optical pickup unit may use the one-chip type laser diode (a two-wavelength one-package laser diode) for the CD and the DVD such as is disclosed in the above-mentioned JP-A 11-149652 and a blue laser diode for the HD-DVD. In addition, the HD-DVD will hereafter be also abbreviated as HD.

In general, an optical pickup unit comprises a laser beam source for irradiating a laser beam and an optical system for guiding the irradiated laser beam to an optical disc and for guiding its reflected beam to a photodetector. The optical system includes an objective lens disposed so as to face the optical disc. The laser beam source and the photodetector are mounted on an outer side wall of an optical base while the optical system except for the objective lens is mounted in the optical base.

It is necessary for the objective lens used in the optical pickup unit to be accurately controlled in position with respect to a focus direction along an optical axis and a track direction along a radial direction of the optical disc to thereby accurately focus the laser beam on a track of a signal recording surface of the rotating optical disc. These controls are called a focusing control and a tracking control, respectively. Further, following improvement in recording density, there have recently been increasing demands for removing or suppressing the influence caused by warping of the optical disc. In view of this, it is also necessary that the objective lens be subjected to a so-called tilting control.

An optical pickup actuator is a device for enabling the focusing control, the tracking control, and the tilting control. The optical pickup actuator is called an objective lens driving device. In the objective lens driving device, an objective lens holder holding the objective lens is elastically supported by a suspension member with respect to a damper base. The suspension member consists of a plurality of suspension wires disposed both sides of the damper base and the objective lens holder (see, for example, Japanese Unexamined Patent Application Publication No. 2003-196865 or JP-A 2003-196865).

Now, the optical pickup actuators are classified into a so-called symmetry type and a so-called asymmetry type. The optical pickup actuators of the symmetry type are ones wherein coils and a magnetic circuit including magnets are symmetrically disposed with respect to the objective lens as a center. The optical pickup actuators of the asymmetry type are ones wherein the coils and the magnetic circuit including magnets are asymmetrically disposed with respect to the objective lens.

One of the optical pickup actuators of the symmetry type is disclosed, for example, in Japanese Unexamined Patent Application Publication No. 2001-93177 or JP-A 2001-93177. According to the JP-A 2001-93177, the optical pickup actuator of the symmetry type comprises an objective lens holder for holding an objective lens, a focusing coil wound around the objective lens holder, tracking coils affixed to the objective lens holder at outer sides in a tangential direction of an optical disc, and tilting coils affixed to the objective lens holder at both sides in a radial direction of the optical disc. These coils are partly located in gaps of the magnetic circuit. With this structure, the optical pickup actuator of the symmetry type is capable of finely controlling a position and an inclination of the objective lens by controlling currents flowing through the respective coils. In addition, inasmuch as it is necessary to affix the tracking coils and the tilting coils to the sides of the objective lens holder, each of the tracking coils and the tilting coils comprises an air-core coil.

In the optical pickup actuator of the symmetry type, the suspension member (the plurality of suspension wires) is provided so as to maintain horizontality in an inactive state. Specifically, the optical pickup actuator is divided into a movable portion including the objective lens holder for holding the objective lens and a fixed portion including the damper base. The movable portion is elastically supported by the suspension member (the plurality of suspension wires) with respect to damper base. The suspension member (the plurality of suspension wires) is disposed so as to extend in parallel with a horizontal plane between the damper base and the objective lens holder.

In addition, in the optical pickup actuator, the damper base includes supporting portions for supporting ends of suspension wires using adhesive agent. The optical pickup actuator comprises an ACT flexible printed wiring board which is electrically connected to the ends of the suspension wires at the supporting portions side. In a conventional optical pickup actuator, the ACT flexible printed wiring board is directly mounted or attached to the supporting portions of the damper base (see, for example, Japanese Unexamined Patent Application Publication No. 2006-18887 or JP-A 2006-18887).

Therefore, when the ends of the suspension wires are soldered to the ACT flexible printed wiring board, there is a fear of deterioration in strength of the adhesive agent because solder's heat transfers to the adhesive agent in the supporting portions. As a result, under high temperature environments or high humidity environments, deviation may occur in the inclination of the objective lens in the optical pickup actuator, and there is a fear of loss of reliability in the optical pickup actuator.

US 5,018,836 discloses an objective lens drive apparatus including an objective lens holder supporting an objective lens which is swingably supported by a plurality of flat spring members which are connected to a flexible printed circuit board mounted on a metal reinforcing plate.

US 2005/0128894 A1 discloses an optical pickup actuator comprising a wire holder and a printed circuit board. The spaces between the circuit board arcuately bent and the wire holder are filled with typical gel functioning as a damper.

US 2003/161228 A1 which forms the basis for delimiting claim 1 discloses an optical pickup with a lens holder. Furthermore, a holding member is provided between the lens holder and a supporting member including holes for accommodating a plurality of linear springs members and a damper gel is filled in the holes. The Linear springs function as a suspension for the action of the lens holder in the focusing direction and the tracking direction, and also function to conduct drive current to a tracking coil and a focus coil through a terminal plate.

### Summary of the Invention:

It is therefore an object of the present invention to provide an optical pickup actuator which is capable of preventing adhesive agent in supporting portions of a damper base from deteriorating in strength. This and other objects are defined in the appended claims.

### Brief Description of the Drawings:

Fig. 1 is a system configuration view of an optical system of a three-wavelength handling optical pickup unit according to an embodiment of this invention;
Fig. 2 is a view showing a structure of a photodetector used in the three-wavelength handling optical pickup unit illustrated in Fig. 1;
Fig. 3 is a perspective view of the three-wavelength handling optical pickup unit illustrated in Fig. 1;
Fig. 4 is a perspective view of the three-wavelength handling optical pickup unit illustrated in Fig. 1;
Fig. 5 is a perspective view of an optical pickup actuator according to an embodiment of this invention;
Fig. 6 is a fragmentary enlarged perspective view of the optical pickup actuator illustrated in Fig. 5;
Fig. 7 is a perspective view of a damper base for use in the optical pickup actuator illustrated in Fig. 5;
Fig. 8 is a plan view of an ACT flexible printed wiring board for use in the optical pickup actuator illustrated in Fig. 5; and
Fig. 9 is an exploded perspective view of the optical pickup actuator illustrated in Fig. 5.

### Description of the Preferred Embodiment:

In the manner which is described above, in optical disc drives, it has been developed one in which a special optical pickup unit is mounted in order to enable to record/reproduce data in/from not only the DVD and the CD but also a high definition DVD (HD-DVD). The special optical pickup unit of the type is for carrying out recording or reproducing by selectively using three kinds of laser beams, namely, a laser beam having a middle wavelength (a wavelength band of 650 nm) for the DVD, a laser beam having a long wavelength (a wavelength band of 780 nm) for the CD, and a laser beam having a short wavelength (a wavelength band of 410 nm) for the HD-DVD. The special optical pickup unit is called a three-wavelength handling optical pickup unit.

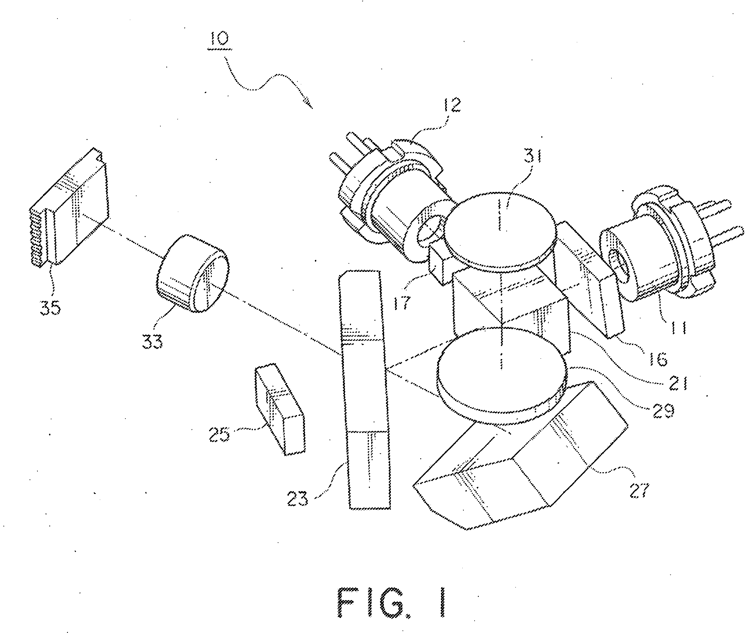

Fig. 1 is a system configuration view of an optical system of the three-wavelength handling optical pickup unit depicted at 10 according to an embodiment of this invention. The illustrated three-wavelength handling optical pickup unit 10 comprises, as laser sources for irradiating leaser beams, a one-chip type laser diode 11 and a blue laser diode 12.

The one-chip type laser diode 11 comprises, as one part (one chip), a first laser diode (not shown) and a second laser diode (not shown). The first laser diode (a first emission point) and the second laser diode (a second emission point) are apart from each other by a predetermined distance of, for example, 100 µ m. The first laser diode is a laser diode for emitting or irradiating a first laser beam having, as a first wavelength, a wavelength of about 780 nm for the CD. The first laser diode is called a "CD-LD" for short. The second laser diode is a laser diode for emitting or irradiating a second laser beam having, as a second wavelength, a wavelength of about 650 nm for the DVD. The second laser diode is called a "DVD-LD" for short. The blue laser diode 12 is called a third laser diode which is a laser diode for emitting or irradiating a third laser beam having, as a third wavelength, a wavelength of about 410 nm for the HD-DVD (HD). The third laser diode is called a "HD-LD" for short.

The three-wavelength handling optical pickup unit 10 comprises an optical system for guiding any one of the first through the third laser beams to an optical disc (not shown) and for guiding its reflected beam to a photodetector 35 (which will later be described). In addition, the optical system includes an objective lens 31 disposed so as to face the optical disc. The laser beam sources 11, 12 and the photodetector 35 are mounted on an outer side wall of an optical base (which will later be described) while the optical system except for the objective lens 31 is mounted in the optical base.

On the other hand, the objective lens 31 is mounted in an objective lens driving device (an optical pickup actuator) which will later be described. In the manner which will later be described, the objective lens driving device elastically supports an objective lens holder holding the objective lens 31 by a plurality of suspension wires with respect to a damper base.

The illustrated three-wavelength handling optical pickup unit 10 comprises, as the optical system, first and second diffraction gratings 16 and 17, a first beam splitter 21, a second beam splitter 23, a front monitor 25, a rising mirror (a total reflection mirror) 27, a collimator lens 29, the above-mentioned objective lens 31, and a sensor lens (detection lens) 33.

A combination of the first diffraction grating 16, the first beam splitter 21, the second beam splitter 23, the rising mirror 27, the collimator lens 29, the objective lens 31, and the sensor lens 33 serves as first or second optical systems for guiding the first or the second laser beams irradiated from the first or the second laser diodes to the optical disc (the CD or the DVD) and for transmitting first or second return beams reflected from the optical disc to guide the photodetector 35. Likewise, a combination of the second diffraction grating 17, the first beam splitter 21, the second beam splitter 23, the rising mirror 27, the collimator lens 29, the objective lens 31, and the sensor lens 33 serves as a third optical system for guiding the third laser beam irradiated from the blue laser diode (the third laser diode) 12 to the optical disc (the HD-DVD) and for transmitting a third return beam reflected from the optical disc to guide the photodetector 35.

The blue laser diode (the third laser diode) 12 is disposed in a center of an optical axis and the second laser diode in the one-chip type laser diode 11 is disposed in the center of the optical axis. Accordingly, the first laser diode in the one-chip type laser diode 11 is disposed at a state shifted from the optical axis. Therefore, the illustrated photodetector 35 is composed so as to receive the first return beam from the CD with it shifted from the optical axis.

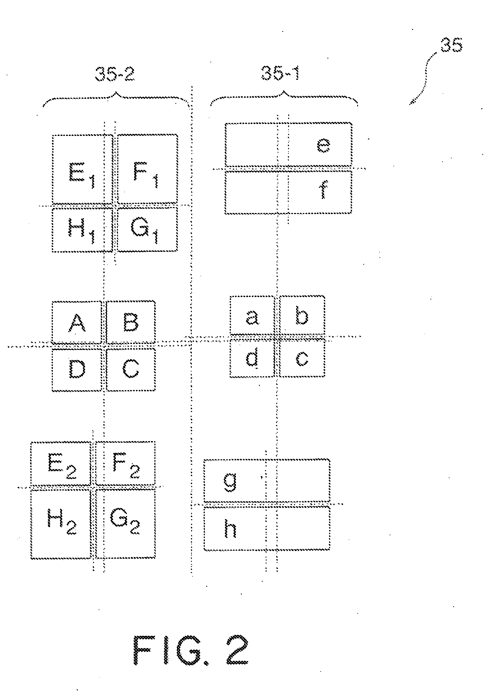

Fig. 2 shows a structure of the photodetector 35 used in the three-wavelength handling optical pickup unit 10 illustrated in Fig. 1. The photodetector 35 comprises a first receiving portion 35-1 for receiving the first return beam and a second receiving portion 35-2 for receiving the second or the third return beams. The first receiving portion 35-1 comprises four divided photo-diodes a, b, c, and d for receiving a central ray bundle (a main beam) and four photo-diodes e, f, g, and h for receiving both side two ray bundles (two sub-beams). The second receiving portion 35-2 comprises four divided photo-diodes A, B, C, and D for receiving a central ray bundle (a main beam), a first set of four photo-diodes E₁, F₁, G₁, and H₁ for receiving a first sub-beam (a leading sub-beam), and a second set of four photo-diodes E₂, F₂, G₂, and H₂ for receiving a second sub-beam (a trailing sub-beam).

Now, description will be made as regards operation of the three-wavelength handling optical pickup unit 10 illustrated in Fig. 1. In the manner which is well known in the art, although the three-wavelength handling optical pickup unit 10 is operable at one of a writing mode and a reproducing mode, the description will be made as regards operation in a case of the reproducing mode.

First, description will be made as regards operation in a case where the CD is used as the optical disc. In this event, only the first laser diode (CD-LD) in the one-chip type laser diode 11 is put into an active state while the second laser diode (DVD-LD) in the one-chip type laser diode 11 and the blue laser diode (the third laser diode) 12 (HD-LD) are put into an inactive state.

The first laser beam irradiated from the first laser diode (CD-LD) passes through the first diffraction grating 16 at which the first laser beam is separated to three laser beams in order to carry out a tracking control, a focusing control, and a tilting control. Thereafter, the three laser beams pass through the first beam splitter 21 and enter the second beam splitter 23 as incoming beams. In the incoming beams, a part passes through the second beam splitter 23 and its through-beam is received by the front monitor 25. At any rate, the front monitor 25 monitors a light-emitting amount of the first laser beam which passes through the second beam splitter 23. On the other hand, in the incoming beams, a reflected beam, which is reflected by the second beam splitter 23, is reflected by the rising mirror 27 upward. When the laser beam reflected by the rising mirror 27 passes through the collimator lens 29, the laser beam, which is a diverged beam, is collimated into a collimated beam. The collimated beam enters the objective lens 30. Passed through the objective lens 30, the laser beam is converged and irradiated on a signal recording surface of the optical disc (the CD).

Reflected by the signal recording surface of the optical disc (the CD), a reflected beam (the first return beam) passes through the objective lens 31 and becomes a converged beam after passing through the collimator lens 29. After reflected by the rising mirror 27, the converged beam passes through the second beam splitter 23. After passing through the sensor lens 33, the converted beam is detected by the first receiving portion 35-1 (Fig. 2) of the photodetector 35.

Secondly, description will be made as regards operation in a case where the DVD is used as the optical disc. In this event, only the second laser diode (DVD-LD) in the one-chip type laser diode 11 is put into an active state while the first laser diode (CD-LD) in the one-chip type laser diode 11 and the blue laser diode (the third laser diode) 12 (HD-LD) are put into an inactive state.

The second laser beam irradiated from the second laser diode (DVD-LD) passes through the first diffraction grating 16. Thereafter, the second laser beam passes through the first beam splitter 21 and enters the second beam splitter 23 as an incoming beam. In the incoming beam, a part passes through the second beam splitter 23 and its through-beam is received by the front monitor 25. At any rate, the front monitor 25 monitors a light-emitting amount of the second laser beam which passes through the second beam splitter 23. On the other hand, in the incoming beam, a reflected beam, which is reflected by the second beam splitter 23, is reflected by the rising mirror 27 upward. When the laser beam reflected by the rising mirror 27 passes through the collimator lens 29, the laser beam, which is a diverged beam, is collimated into a collimated beam. The collimated beam enters the objective lens 30. Passed through the objective lens 30, the laser beam is converged and irradiated on a signal recording surface of the optical disc (the DVD).

Reflected by the signal recording surface of the optical disc (the DVD), a reflected beam (the first second beam) passes through the objective lens 31 and becomes a converged beam after passing through the collimator lens 29. After reflected by the rising mirror 27, the converged beam passes through the second beam splitter 23. After passing through the sensor lens 33, the converted beam is detected by the second receiving portion 35-2 (Fig. 2) of the photodetector 35.

Lastly, description will be made as regards operation in a case where the HD-DVD is used as the optical disc. In this event, only the blue laser diode (the third laser diode) 12 (HD-LD) is put into an active state while the first laser diode (CD-LD) and the second laser diode (DVD-LD) in the one-chip type laser diode 11 are put into an inactive state.

The third laser beam irradiated from the blue laser diode (the third laser diode) 12 (HD-LD) passes through the second diffraction grating 17 at which the third laser beam is separated to three laser beams in order to carry out the tracking control, the focusing control, and the tilting control. Thereafter, the three laser beams are reflected by the first beam splitter 21 and enter the second beam splitter 23 as incoming beams. In the incoming beams, a part passes through the second beam splitter 23 and its through-beam is received by the front monitor 25. At any rate, the front monitor 25 monitors a light-emitting amount of the third laser beam which passes through the second beam splitter 23. On the other hand, in the incoming beams, a reflected beam, which is reflected by the second beam splitter 23, is reflected by the rising mirror 27 upward. When the laser beam reflected by the rising mirror 27 passes through the collimator lens 29, the laser beam, which is a diverged beam, is collimated into a collimated beam. The collimated beam enters the objective lens 31. Passed through the objective lens 31, the laser beam is converged and irradiated on a signal recording surface of the optical disc (the HD-DVD).

Reflected by the signal recording surface of the optical disc (the HD-DVD), a reflected beam (the third return beam) passes through the objective lens 31 and becomes a converged beam after passing through the collimator lens 29. After reflected by the rising mirror 27, the converged beam passes through the second beam splitter 23. After passing through the sensor lens 33, the converted beam is detected by the second receiving portion 35-2 (Fig. 2) of the photodetector 35.

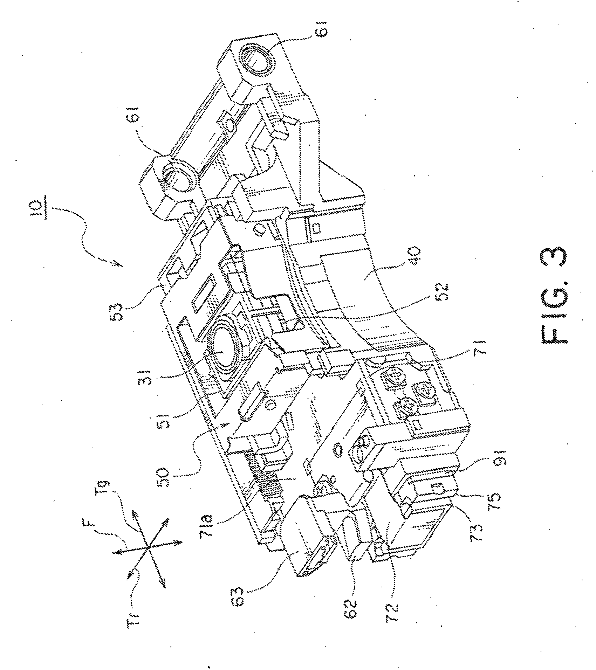

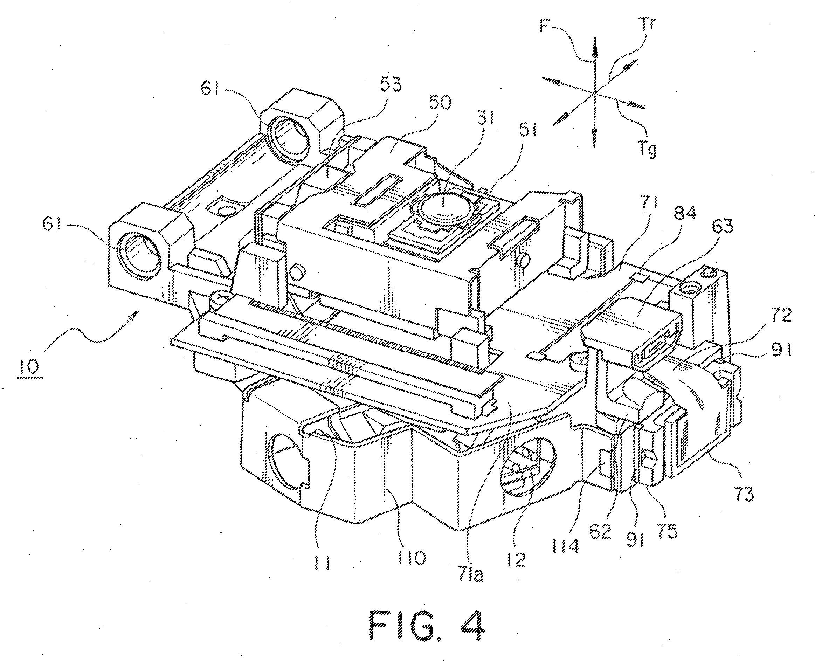

Referring to Figs. 3 and 4, the description further will proceed to the three-wavelength handling optical pickup unit 10. Hereinafter, the three-wavelength handling optical pickup unit 10 is merely called an optical pickup unit.

The optical pickup unit 10 comprises an optical base 40. On the optical base 40, an objective lens driving device or an optical pickup actuator 50 is mounted through an OPU circuit board 71. The optical base 40 is movably mounted to guide bars (not shown) in a radial direction (a tracking direction Tr) of the optical disc loaded in an optical disc drive. In other words, the optical pickup unit 10 is sled-moved in a predetermined disc's radial direction (the tracking direction Tr) by a pickup driving portion (not shown). The pickup driving portion comprises, as the guide bars, a main shaft (not shown) and a subsidiary shaft (not shown) which sled-movably support the optical pickup unit 10 at both ends thereof in the predetermined disc's radial direction (the tracking direction Tr). Both of the main shaft and the subsidiary shaft are disposed so as to substantially extend in parallel with the predetermined disc's radial direction (the tracking direction Tr).

The optical pickup unit 10 comprises an engaging portion (an engaging hole) 61 engaged with the main shaft and a U-shaped sliding contact portion 62 in cross section that is slidably supported by the subsidiary shaft. In the example being illustrated, the sliding contact portion 62 has an upper sliding contact part into which a cap 63 is fitted. Between the cap 62 and a lower sliding contact part of the sliding contact portion 62, the subsidiary shaft is sandwiched.

The objective lens driving device (the optical pickup actuator) 50 comprises an objective lens holder 51 having a shape of substantially rectangular parallelepiped. The objective lens holder 51 has a lens fitting portion for fitting the objective lens 31 at a center thereof. The illustrated objective lens driving device 50 is a symmetry type where coils (not shown) and a magnetic circuit (not shown) including magnets are symmetrically disposed with respect to the objective lens 31 as a center. The objective lens driving device (the optical pickup actuator) 50 of the symmetry type comprises the objective lens holder 51 for holding the objective lens 31, a focusing coil (not shown) wound around the objective lens holder 51, tracking coils (not shown) affixed to the objective lens holder 51 at outer sides in a tangential direction Tg of the optical disc, and tilting coils (not shown) affixed to the objective lens holder 51 at both sides in a radial direction of the optical disc. These coils are partly located in gaps of the magnetic circuit. With this structure, the objective lens driving device (the optical pickup actuator) 50 of the symmetry type is capable of finely controlling a position and an inclination of the objective lens 31 by controlling currents flowing through the respective coils.

More specifically, the objective lens driving device (the optical pickup actuator) 50 elastically supports the objective lens holder 51 for holding the objective lens 31 at a damper base 53 via six suspension wires 52. In other words, the objective lens holder 51 is supported at the damper base 53 by the six suspension wires 52 which extend in the tangential direction Tg. The six suspension wires 52 are used also as wires for electrically connecting the above-mentioned various coils with an external circuit, namely, a driving circuit (not shown) for the objective lens driving device (the optical pickup actuator) 50. In the objective lens holder 51, the tilting coils, the focusing coil, and the tracking coils are wound in the manner which is described above. By suitably controlling currents flowing through these coils, the objective lens holder 51 tilts in the tracking direction Tr (rotates around an axis in parallel to the tangential direction Tg), shifts in the tracking direction Tr, or shifts in the focusing direction F on the basis of relationships between the currents and magnetic fields produced by the magnetic circuit consisting of a yoke and the magnets.

On an upper surface of the optical base 40, the OPU circuit board 71 is mounted. On the OPU circuit board 71, the objective lens driving device 50 is fixed on the optical base 40 at four corners thereof by using a UV adhesive with a space left therebetween.

The photodetector 35 is mounted on a PD circuit board 73 and is fixed to the outer side wall of the optical base 40 by using a UV adhesive 91 with the photodetector 35 held by a PD holder 75.

As shown in Fig. 2, the photodetector 35, which receives the reflected beam (the return beam) from the optical disc, comprises the lot of photo-diodes. Received by the lot of photo-diodes, received signals are processed in a processing circuit (not shown) of the photodetector 35 and are sent to the OPU circuit board 71 via a PD flexible printed circuit board (FPC) 72.

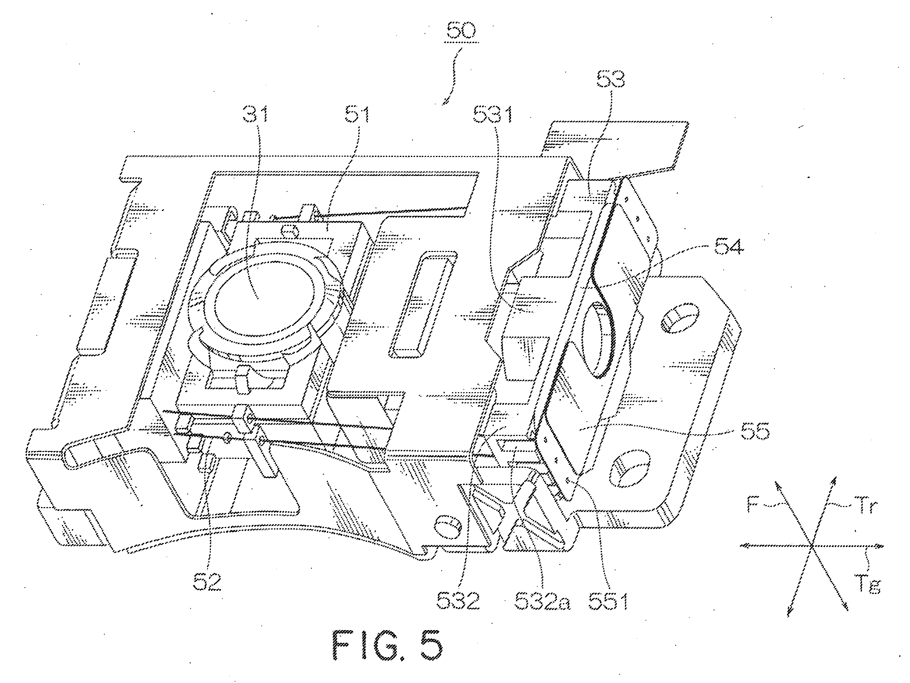

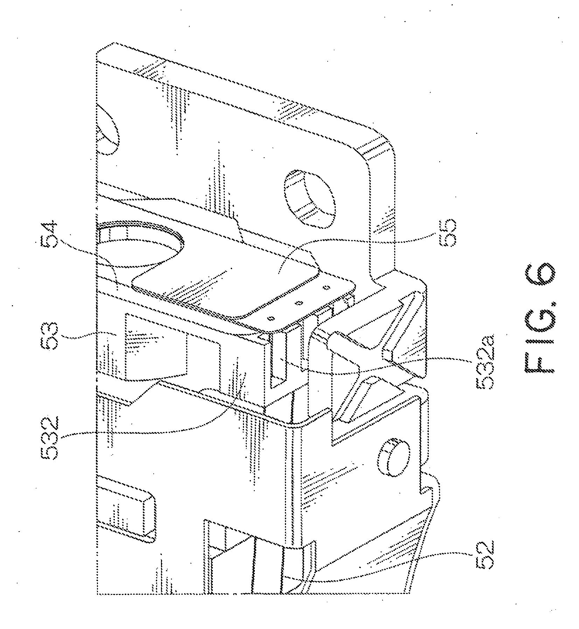

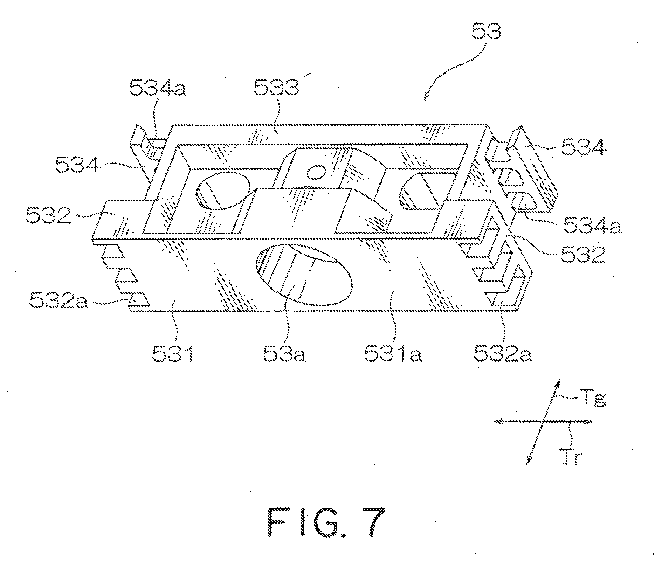

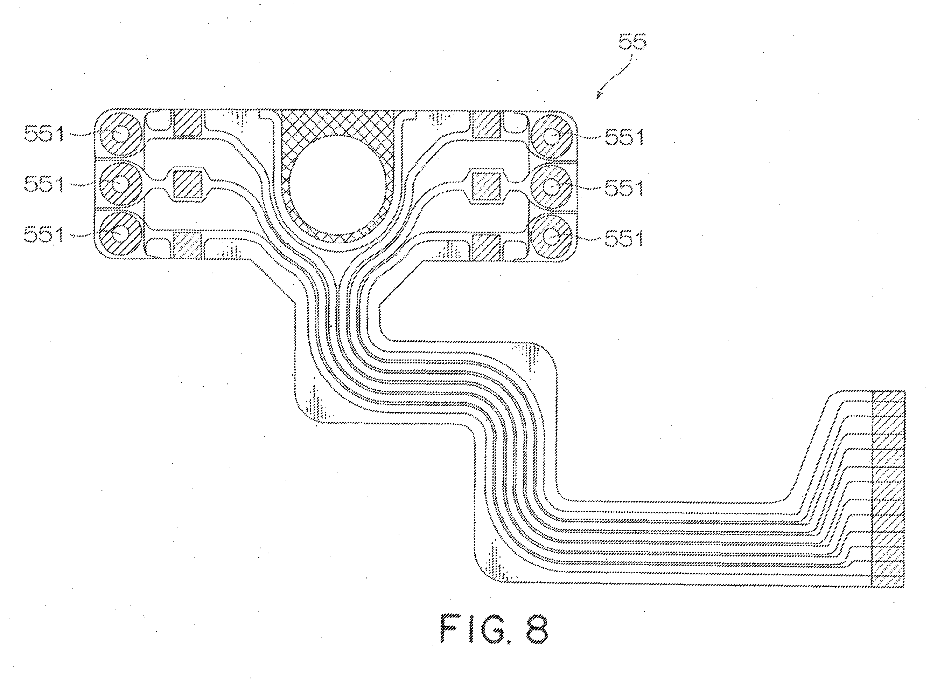

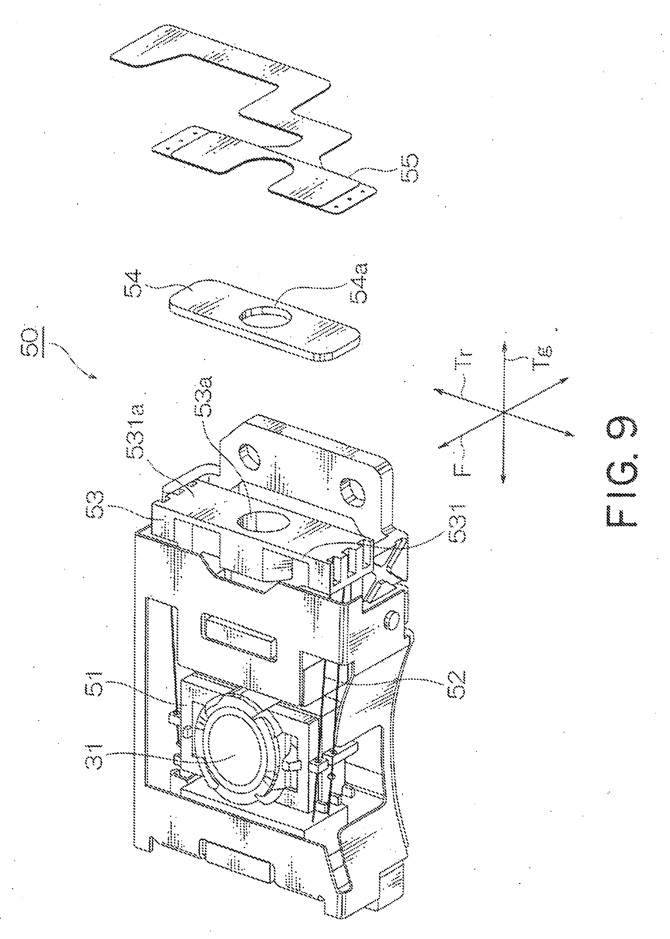

Referring to Figs. 5 through 9, the description will proceed to the optical pickup actuator 50 according to an embodiment of this invention. Fig. 5 is a perspective view of the optical pickup actuator 50. Fig. 6 is a fragmentary enlarged perspective view of the optical pickup actuator 50. Fig. 7 is a perspective view of the damper base 53. Fig. 8 is a plan view of an ACT flexible printed wiring board 55. Fig. 9 is an exploded perspective view of the optical pickup actuator 50.

As shown in Fig. 7, the damper base 53 comprises a rear end wall portion 531 in the tangential direction Tg at a rear end thereof. The rear end wall portion 531 has supporting portions 532 for supporting ends of the six suspension wires 52 in the tracking direction Tr at both ends thereof. The end of each suspension wire 52 passes through and penetrates the supporting portion 532 and is adhesively fixed in a concave portion 532a formed in the supporting portion 532 by using adhesive agent (not shown). The damper base 53 comprises a front end wall portion 533 in the tangential direction Tg at a front end thereof. The front end wall portion 533 has damper portions 534 in the tracking direction Tr at both ends thereof. In other words, the damper portions 534 are apart from the supporting portions 532 in the tangential direction Tg and are disposed at the objective lens holder 51 side. The damper portions 534 have through holes (grooves) 534a along the focusing direction F. Damping agents (not shown) such as silicone gel are filled in the through holes (grooves) 534a.

The rear end wall portion 531 of the damper base 53 has a concave portion 53a which enables to receive a head of a screw (not shown) while the front end wall portion 533 has a through hole (not shown) for passing through a screw portion of the screw in question. Opposed to the afore-mentioned through hole, a yoke (not shown) constituting a magnetic circuit has a screw hole (not shown) in which the above-mentioned screw is threaded.

As shown in Figs. 5, 6, and 9, the rear end wall portion 531 of the damper base 53 has a rear face 531 a on which the ACT flexible printed wiring board 55 is mounted or attached through a reinforcing plate 54. In the example being illustrated, the reinforcing plate 54 has a plate thickness of 0.5 mm. The plate thickness of the reinforcing plate 54 may desirably lie in a range between 0.3 mm and 0.7 mm. The reinforcing plate 54 has a width in the tracking direction Tr that is shorter than a distance between the concave portions 532a of the supporting portions 532 formed in the rear end wall portion 531 at the both ends thereof. As a result, between the supporting portions 532 and the ACT flexible printed wiring board 55, a gap having a size which is substantially equal to the plate thickness of the reinforcing plate 54 is set. At any rate, the reinforcing plate 54 serves as a gap setting arrangement for setting the gap between the ACT flexible printed wiring board 55 and the supporting portions 532.

As shown in Fig. 8, the ACT flexible printed wiring board 55 has through holes 551 for passing through the ends of the six suspension wires 52. Accordingly, the ends of the six suspension wires 52 pass through the through holes 551 and are electrically connected to the ACT flexible printed wiring board 55 using solder (not shown).

In the manner which is described above, the optical pickup actuator 50 according to the embodiment of this invention keeps or ensures the gap between the supporting portions 532 and the ACT flexible printed wiring board 55 by adding or sandwiching the reinforcing plate 54 between the damper base 53 and the ACT flexible printed wiring board 55. Therefore, when the ends of the six suspension wires 52 are soldered to the ACT flexible printed wiring board 55, solder's heat is difficult to transfer to the adhesive agent filled in the concave portions 532a of the supporting portions 532. As a result, it is possible to prevent the adhesive agent from deteriorating in strength. It is therefore in the optical pickup actuator 50 possible to prevent the inclination of the objective lens 31 from moving off.

Incidentally, as shown in Fig. 5, other ends of the six suspension wires 52 are supported by supporting portions formed on two side walls of the objective lens holder 51 that are parallel with each other in the tangential direction Tg. In addition, as shown in Fig. 4, the optical pickup unit 10 comprises a side cover 110 for covering the one-chip type laser diode 11 and the blue laser diode 12. The side cover 110 has an end fixed to the optical base 40 by a screw (not shown) and another end fixed to the optical base 40 by a UV adhesive 114. The side cover 110 and the optical base 40 are closed to each other with gaps at which a silicone resin (not shown) is affixed. The side cover 110 is for preventing a person (a manufacturing person) from directly being contact with LD terminals of the one-chip type laser diode 11 and the blue laser diode 12 on handling the optical pickup unit 10 in question. It is therefore possible to prevent the one-chip type laser diode 11 and the blue laser diode 12 from destroying. In addition, the side cover 110 acts not only to protect the laser diodes but also to reduce radiation of undesired noises to outside.

While this invention has thus far been described in conjunction with a preferred embodiment thereof, it will now be readily possible for those skilled in the art to put this invention into various other manners without departing from the scope of this invention. For example, although description is exemplified in a case where the HD-DVD is used as the optical disc for the blue laser beam, a Blu-ray disc may be used in lieu of the HD-DVD. Needless to say, this invention is not restricted to the three-wavelength handling optical pickup units, this invention may be applicable to various types of optical pickup units. In addition, although the description has been exemplified in a case of keeping a gap between supporting portions and an ACT flexible printed wiring board by using a reinforcing plate as a gap setting arrangement in the above-mentioned embodiment, this invention is not restricted to this and may use various gap setting arrangements. For example, it may keep the gap between the supporting portions and the ACT flexible printed wiring board by using a board in lieu of the reinforcing plate or may keep the gap between the supporting portions and the ACT flexible printed wiring board by using a damper base having a special shape.

## Claims

1. An optical pickup actuator (50) which is movable along a tracking direction (Tr), said optical pickup actuator (50) comprising an objective lens holder (51) which holds an objective lens (31) and on which at least tracking coils and a focusing coil are mounted, and a damper base (53) for swingably supporting the objective lens holder (51) via a plurality of suspension wires (52), said damper base (53) comprising a rear wall (531) including supporting portions (532) for supporting ends of said suspension wires (52) by adhesive agent; said optical pickup actuator comprising an flexible printed wiring board (55) which is electrically connected to the ends of said suspension wires (52) at said supporting portions (532) side, and a reinforcing plate (54) for setting a gap between said flexible printed wiring board (55) and said supporting portions (532), wherein said reinforcing plate (54) lying between said flexible printed wiring board (55) and the part of said rear wall portion (531) defined by the distance in the tracking direction Tr of the concave portions (532a) of the supporting portions (532), **characterized in that** said damper base (55) comprises a front wall portion (533) which includes damper portions (534) in the tracking direction at both ends and which are apart from the supporting portions (532) in a tangential direction (Tg) that is perpendicular to the tracking direction (Tr) and which are disposed at said objective lens holder (51) side, each of said damper portions (534) having throug holes or grooves (534a) along the focusing direction filled with damping agent through which a corresponding one of the suspension wires (52) is inserted.

2. The optical pickup actuator as claimed in claim 1, wherein said reinforcing plate (54) has a thickness which lies in a range between 0.3 mm and 0.7 mm.

3. The optical pickup actuator as claimed in claim 2, wherein the thickness of said reinforcing plate (54) is 0.5 mm.

4. An optical pickup unit (10) comprising the optical pickup actuator (50) as claimed in any of claims 1-3.

5. The optical pickup unit as claimed in claim 4, wherein said optical pickup unit comprises a three-wavelength holding optical pickup unit (10) which is enable to carry out recording or reproducing for three kinds of optical recoding media by selectively using three kinds of laser beams having different wavelengths.

## Patentansprüche

1. Stellantrieb (50) für eine optische Aufnahmevorrichtung, der entlang einer Spurführungsrichtung (Tr) beweglich ist, wobei der Stellantrieb (50) für eine optische Aufnahmevorrichtung einen Objektivlinsenhalter (51), der eine Objektivlinse (31) hält und auf dem wenigstens Spurspulen und eine Fokussierungsspule montiert sind, und eine Dämpfungsbasis (53) zum schwingenden Tragen des Objektivlinsenhalters (51), über eine Vielzahl von Aufhängungsdrähten (52), umfasst, wobei die Dämpfungsbasis (53) eine hintere Wand (531) umfasst, enthaltend Halteteile (532) zum Halten von Enden der Aufhängungsdrähte (52) durch einen Klebstoff, wobei der Stellantrieb für eine optische Aufnahmevorrichtung eine flexible bedruckte Leiterplatte (55), die elektrisch an die Enden der Aufhängungsdrähte (52) an der Seite der Halteteile (532) angeschlossen ist, und eine Verstärkungsplatte (54) umfasst, um eine Lücke zwischen der flexiblen bedruckten Leiterplatte (55) und den Halteteilen (532) einzustellen, wobei sich die Verstärkungsplatte (54) zwischen der flexiblen bedruckten Leiterplatte (55) und dem Teil des hinteren Wandteils (531) befindet, der durch den Abstand in der Spurführungsrichtung Tr der konkaven Abschnitte (532a) der Halteteile (532) definiert wird, **dadurch gekennzeichnet, dass** die Dämpfungsbasis (53) ein vorderes Wandteil (533) umfasst, das Dämpfungsteile (534) in der Spurführungsrichtung an beiden Enden beinhaltet und welche sich abseits von den Halteteilen (532) in einer tangentialen Richtung (Tg) befinden, die senkrecht zur Spurführungsrichtung (Tr) ist, und welche auf der Seite des Objektivlinsenhalters (51) angeordnet sind, wobei jedes der Dämpfungsteile (534) Durchgangslöcher oder Vertiefungen (534a) entlang der Fokussierungsrichtung aufweist, die mit einem Dämpfungsmittel gefiillt sind, durch welches ein entsprechender Aufhängungsdraht (52) eingesetzt ist.

2. Stellantrieb für eine optische Aufnahmevorrichtung nach Anspruch 1, wobei die Verstärkungsplatte (54) eine Dicke aufweist, die in einem Bereich zwischen 0,3 mm und 0,7 mm liegt.

3. Stellantrieb für eine optische Aufnahmevorrichtung nach Anspruch 2, wobei die Dicke der Verstärkungsplatte (54) 0,5 mm beträgt.

4. Optische Aufnahmeeinheit (10), umfassend den Stellantrieb (50) für eine optische Aufnahmevorrichtung nach einem der Ansprüche 1 bis 3.

5. Optische Aufnahmeeinheit nach Anspruch 4, wobei die optische Aufnahmeeinheit eine drei Wellenlängen aufweisende optische Aufnahmeeinheit (10) umfasst, die in der Lage ist, das Aufnehmen oder Wiedergeben für drei Arten von optischen Aufzeichnungsmedien durch selektives Nutzen dreier Arten von Laserstrahlen, die unterschiedliche Wellenlängen besitzen, auszuführen.

## Revendications

1. Actionneur (50) de tête de lecture optique pouvant se déplacer dans une direction de poursuite (Tr), ledit actionneur (50) de tête de lecture optique comprenant un support (51) de lentille de focalisation supportant une lentille de focalisation (31) et sur lequel sont montés au moins des bobines de poursuite et une bobine de focalisation, et un socle d'amortisseur (53) destiné à supporter avec une latitude d'oscillation le support (51) de lentille de focalisation via plusieurs fils de suspension (52), ledit socle d'amortisseur (53) comprenant une paroi arrière (531) incluant des parties de support (532) destinées à supporter des extrémités desdits fils de suspension (52) par un agent adhésif, ledit actionneur de tête de lecture optique comprenant un circuit imprimé flexible (55) qui est connecté électriquement aux extrémités desdits fils de suspension (52) du côté desdites parties de support (532), et une plaque de renforcement (54) destinée à créer un espace entre ledit circuit imprimé flexible (55) et lesdites parties de support (532), dans lequel ladite plaque de renforcement (54) située entre ledit circuit imprimé flexible (55) et ladite partie de paroi arrière (531) est définie par la distance dans la direction de poursuite (Tr) des parties concaves (532a) des parties de support (532), **caractérisé en ce que** ledit socle d'amortisseur (53) comprend une partie (533) de paroi avant qui inclut des parties d'amortisseur (534) dans la direction de poursuite aux deux extrémités et qui sont séparées des parties de support (532) dans une direction tangentielle (Tg) perpendiculaire à la direction de poursuite (Tr) et qui sont disposées du côté dudit support (51) de lentille de focalisation, chacune desdites parties d'amortisseur (534) disposant de trous de passage ou de fentes (534a) dans la direction de focalisation remplis d'un agent d'amortissement à travers lequel est inséré un des fils de suspension (52) correspondant.

2. Actionneur de tête de lecture optique tel que revendiqué dans la revendication 1, dans lequel ladite plaque de renforcement (54) a une épaisseur qui se situe dans une plage entre 0,3 mm et 0,7 mm.

3. Actionneur de tête de lecture optique tel que revendiqué dans la revendication 2, dans lequel l'épaisseur de ladite plaque de renforcement (54) est de 0,5 mm.

4. Unité (10) de tête de lecture optique comprenant l'actionneur (50) de tête de lecture optique tel que revendiqué dans l'une quelconque des revendications 1-3.

5. Unité de tête de lecture optique telle que revendiquée dans la revendication 4, dans laquelle ladite unité de tête de lecture optique comprend une unité (10) de tête de lecture optique à trois longueurs d'ondes qui est capable d'effectuer un enregistrement ou une reproduction pour trois sortes de supports d'enregistrement optique en utilisant sélectivement trois sortes de faisceaux laser ayant différentes longueurs d'ondes.
